# EUROPEAN PATENT SPECIFICATION

(11) **EP 2 694 807 B1**
(45) Date of publication and mention of the grant of the patent: **17.08.2016**
(21) Application number: 11757196.8
(22) Date of filing: 17.08.2011
(51) Int. Cl.: F03D 7/02, F03D 7/04

(54) **METHOD OF CONTROLLING PITCH SYSTEMS OF A WIND TURBINE**
VERFAHREN ZU STEUERUNG VON NEIGUNGSWINKELSYSTEMEN EINER WINDTURBINE
PROCÉDÉ DE COMMANDE DES SYSTÈMES DE PAS D'UNE ÉOLIENNE

(30) Priority: 07.04.2011 EP 11161524
(43) Date of publication of application: 12.02.2014
(73) Proprietor: Siemens Aktiengesellschaft, 80333 München (DE)
(72) Inventor: ESBENSEN, Thomas, DK-7400 Herning (DK); HOEGH, Gustav, DK-7400 Herning (DK)
(86) International application number: PCT/EP2011/064134
(87) International publication number: WO 2012/136279

(56) References cited:
- EP-A1- 1 666 723
- WO-A1-2010/148933
- WO-A2-2009/026930
- WO-A2-2009/033484
- WO-A2-2009/071882
- WO-A2-2010/022735
- US-A1- 2008 247 873
- US-A1- 2010 014 969

## Description

The invention describes a method of controlling the pitch systems of a wind turbine; a pitch control system for controlling the pitch systems of a wind turbine; and a wind turbine.

A wind turbine generally comprises two or three rotor blades connected to a hub. Each blade is usually connected to the hub by means of a pitch system, whose function it is to allow the blade to rotate to some degree about its longitudinal axis in order to obtain an optimal pitch angle. To this end, a pitch actuator, for example an electrical motor, a hydraulic piston, or another type of actuator is used to drive or rotate the pitch system by an appropriate amount. To allow the rotor blade to move relative to the hub, the pitch system encloses a bearing that is lubricated to minimize friction.

The pitch angle of a rotor blade is adjusted to optimally capture power from the wind, and can be controlled to maximize or to limit the captured wind power, depending on the momentary operation region, i.e. the mode in which the wind turbine is being operated at any one time. Combining pitch control and control of the generator and/or converter is used to obtain a desired rotational speed of the hub and a corresponding power output of the wind turbine. The pitch angle is usually defined as the angle between a plane of rotation of the rotor blade and a chord extending from the leading edge of the blade to the trailing edge. Evidently, for maximum efficiency during low wind speeds, a wind turbine controller will attempt to maintain an optimal angle of attack by pitching the blades in their optimal pitch angle, whereas for high wind speeds, a wind turbine controller will pitch the blades to maintain a nominal speed reference, such that a maximum blade tip speed is not exceeded. Various methods of controlling a pitch system are known. For example US 2010/014969 A1 and EP 1 666 723 A1 describe methods of pitching rotor blades according to a common pitch angle and an individual pitch angle. WO 2009/071882 A2 measures the load acting on a blade, and uses this to determine the blade pitch angle for that blade. WO 2009/026930 A2 also considers pitching the rotor blades individually. WO 2010/148933 A1 and US 2008/247873 A1 apply pitch control signals to the rotor blades in order to counteract an imbalance. WO 2009/033484 A2 measures the load acting on a rotor blade as it passes through a region in the rotor rotational plane, to determine a better pitch angle for the following rotor blade.

The bearings of the rotor blade pitch systems can be roller bearings, sliding pad bearings, etc., and are generally lubricated using a suitable oil or grease. It is of paramount importance that the lubricant is evenly distributed in the pitch bearing, since a jamming or locking of the bearing could cause serious damage to the wind turbine. In variable windy conditions, when the generator is running at rated power, the usual alterations in pitch angle - initiated by the wind turbine controller collectively for all blades - are generally sufficient to ensure that the lubricant is evenly distributed in the bearing. However, for low wind speeds, or at higher constant wind speeds, the wind turbine controller may only infrequently carry out very minor adjustments to the pitch angle, or no adjustments at all, so that the collective pitch angle remains essentially constant, and the pitch systems remain essentially inactive over long periods of time. As a result, the lubricant in a pitch bearing may be unsatisfactorily distributed, and damage to the pitch bearing, the actuator, or even the wind turbine itself may ensue if the bearing becomes blocked or jammed. In a known approach to this problem, the wind turbine controller intermittently issues a collective pitch adjustment signal to the pitch systems of the rotor blades, causing these to simultaneously pitch slightly with the intention of distributing the lubricant in the bearings. For example, such a control method can involve changing the pitch angle of all the blades by one degree every minute. However, such a collective change in pitch angle results in a relatively large disturbance, and may result in tower oscillations. Collective pitch adjustment is generally carried out until the output power reaches about 90% of rated power, after which the usual level of pitch activity may be enough to ensure that the bearings remain well lubricated. In another approach, a wind turbine controller can observe a tower movement and can apply active tower damping, which involves adding an offset to the collective pitch reference based on the tower movement. However, these intermittent changes in pitch angle can lead to increased noise, increased load, increased wear in the pitch bearings, and/or to a drop in power output. Particularly for wind farms close to populated areas, it is important to ensure that the noise level is kept to a favourable minimum. Furthermore, since high efficiency is a design target of a wind turbine generator, a reduction in power output on the grounds of lubricant issues is evidently undesirable.

It is therefore an object of the invention to provide an improved way of ensuring that a pitch bearing remains well lubricated during all pitch control phases, while overcoming the problems mentioned above.

The object of the invention is achieved by the method of claim 1 of controlling the pitch systems of a plurality of pitch systems of a wind turbine; by the pitch control system of claim 12 for controlling the pitch systems; and by the wind turbine of claim 14.

According to the invention, the method of controlling the pitch systems of a plurality of pitch systems of a wind turbine comprises the steps of generating a main shared or common pitch control signal for the pitch systems on the basis of a performance parameter of the wind turbine; generating a distinct auxiliary pitch control signal for each individual pitch system of the plurality of pitch systems; adding an auxiliary pitch control signal to the main pitch control signal to give a combined pitch control signal for a pitch system; and controlling that pitch system in response to that combined pitch control signal, wherein an auxiliary pitch control signal is suppressed when a pitch activity value and/or a pitch variation value is below a predefined threshold.

An advantage of the method according to the invention is that even during low pitch activity intervals, the pitch systems of a wind turbine can be activated individually in order to stimulate a movement. In this way, a favourable distribution of lubricant in the pitch bearing of a pitch system can be ensured, for example even during such intervals in which the rotor blades would otherwise not be pitched to any significant extent. Furthermore, during a period of operation in which the main pitch control signal is used to alter the pitch angle collectively for the rotor blades, an auxiliary pitch control signal can be generated to only introduce a favourably minor alteration of the pitch angle so that detrimental side effects of a departure from an optimal pitch angle - such as an increase in acoustic noise or a decrease in output power - can be kept to a favourable minimum. The method according to the invention allows separate control of the pitch systems, i.e. the pitch systems are controlled separately, not collectively, so that the method according to the invention moves away from the established techniques that involve collective pitch control of all the rotor blades simultaneously. Furthermore, an auxiliary pitch control signal is suppressed when a pitch activity value and/or a pitch variation value is below a predefined threshold. Such a threshold might define, for example, that a pitch system must be moved by 1° at most every 5 minutes. Another approach might be to monitor the pitch activity of the individual blades at regular intervals, and if the pitch activity of a blade is judged not to be sufficient, an auxiliary pitch correction signal can be applied to the relevant blade(s). Therefore, the method according to the invention is particularly efficient and involves a favourable minimum of additional pitch activity.

According to the invention, the pitch control system for controlling the pitch systems of a plurality of pitch systems of a wind turbine comprises a controller for generating a main pitch control signal for the pitch systems on the basis of a power output of the wind turbine, the rotational speed, e.g.; an auxiliary controller for generating a distinct auxiliary pitch control signal for each individual pitch system of the plurality of pitch systems; a combining unit for adding an auxiliary pitch control signal to the main pitch control signal to give a combined pitch control signal for a pitch system; and a pitch system actuator for controlling that pitch system in response to that combined pitch control signal, wherein an auxiliary pitch control signal is suppressed when a pitch activity value and/or a pitch variation value is below a predefined threshold.

According to the invention, the wind turbine comprises a number of rotor blades connected to a hub, wherein a rotor blade is connected to the hub by means of a pitch system, and wherein the wind turbine comprises such a pitch control system for controlling the pitch systems using the method according to the invention.

An advantage of the wind turbine according to the invention is that maintenance effort for the pitch systems can be favourably reduced, while also ensuring that the auxiliary pitch control does not result in any significant increase in noise output or in load, so that there is no significant decrease in output power.

Particularly, advantageous embodiments and features of the invention are given by the dependent claims, as revealed in the following description. Features described in the context of one claim category can apply equally to another claim category. Features of the different claim categories may be combined as appropriate to arrive at further embodiments.

The term "signal" as used in the context of a pitch control signal is to be understood as any appropriate type of signal that can be used to control an actuator of a pitch system in order to obtain a certain pitch angle for the rotor blade connected to that pitch system. For example, a pitch control signal can be a digital signal or an analogue signal, depending on the type of actuator used. In the following, it may be assumed that the amplitude of the signal - whether digital or analogue - has a defined relationship to the pitch angle, so that a specific amplitude is associated with a specific pitch angle. As mentioned above, an actuator can comprise one or more electrical motors, hydraulic pistons, etc. A main pitch control signal can be applied to a pitch system to bring that pitch system to a particular position corresponding to the momentary requirements, while an auxiliary pitch control signal can be overlaid onto the main pitch control signal.

Preferably, the auxiliary pitch control signal is zero or "null" most of the time, i.e. the pitch systems are controlled by the main pitch control signal, which is usually generated to obtain an optimal pitch angle for all rotor blades during operation below a rated wind speed. An "optimal pitch angle" is to be understood as the pitch angle that maximises the aerodynamic efficiency and therefore also the efficiency of the wind turbine. For relatively brief periods of time, as will become clear in the following, an auxiliary pitch control signal is added to or overlaid on the main pitch control signal and the pitch system is controlled by the combined signal, after which the pitch system is controlled only by the main pitch control signal once more. Since the auxiliary pitch control signals are applied separately to the rotor blades instead of collectively, it is clear that the method according to the invention achieves a minimum disturbance or departure from the optimal pitch angle, and therefore also a minimum decrease in generator efficiency.

The pitch angle could be pitched towards stall', i.e. the combined pitch control signal could be decreased by effectively adding a negative auxiliary pitch control signal to the main pitch control signal. However, such a pitch adjustment may be associated with drawbacks. Therefore, in the following, but without restricting the invention in any way, it may be assumed that the auxiliary pitch control signal serves to increase the pitch angle, i.e. to make the pitch angle more 'positive', which is also referred to as 'changing the pitch angle towards feather', in order to minimize any increase in loads, noise, etc.

The extent to which a rotor blade should be pitched for lubricant distribution purposes may be determined in a number of ways. Preferably, a duration and/or an amplitude of an auxiliary pitch control signal is determined on the basis of a relevant performance parameter of the wind turbine such as a hub/rotor rotational speed, a generator rotational speed, the wind speed, a rotor torque, an output power value, a wind turbine controller status, a tower movement, etc. For example, at low hub rotational speed, which usually coincides with a low wind speed and a 'closed' pitch angle, the auxiliary pitch control signals may be applied more often.

In the known methods described in the introduction, the pitch angles of the rotor blades are collectively adjusted during periods of prolonged pitch inactivity with the aim of distributing the lubricant. Therefore, pitch angles are changed for the rotor blades regardless of their angular position. This leads to the increase in noise and decrease in output power mentioned above. In a particularly preferred embodiment of the invention, an auxiliary pitch control signal is applied to the pitch system of a rotor blade as that rotor blade passes through a specific sector of a rotor rotational plane, which the rotor rotational plane comprises a virtual vertical plane through the rotor blades. In this way, the method according to the invention makes it possible to take advantage of different wind speeds present at any instant over different regions of the rotor rotational plane. In the following, the vertical rotational plane is to be understood to have a reference position defining a 0° "starting point" corresponding to the vertically highest point that can be reached by a blade tip. When a blade moves through one complete rotation, its tip essentially describes a circle starting at 0° through 360°. The plane can be divided into an upper half and a lower half. With the reference at the 0° position, a blade completes a half rotation as it moves through the upper half from 270° through the reference to 90° beyond the reference, so that the upper half can be defined as the angular region bounded by lines originating at the centre of the hub and lying at ±90° with respect to the reference 0°.

The wind speed can be higher in the upper regions of the rotor rotational plane compared to wind speeds in the lower regions of the rotor rotational plane. This phenomenon, which can be observed at most wind farm sites, is called "wind shear" and results in a disturbance in every rotation of the hub, since the wind force acting on a rotor blade is greater when that rotor blade is the upper half of the rotational plane than in the lower half. Therefore, in a further preferred embodiment of the invention, an auxiliary pitch control signal is applied to the pitch system of a blade as the blade passes through the upper half of the rotor rotational plane. In this way, the system can exploit the wind shear effect, and can apply an auxiliary pitch control signal that increases the pitch angle, thereby resulting in a decrease in lift on the blade as the blade passes through the upper half of the rotational plane. A very favourable and positive 'side-effect' of the method according to the invention is that the necessary pitch adjustment (for lubrication distribution purposes) can also result in a load reduction, and/or a drop in the level of acoustic noise, and/or a lower drop in output power compared to the known methods of pitch adjustment.

Furthermore, by only applying an auxiliary pitch control signal while a rotor blade is in the upper half of the rotational plane, the combined pitch control signal is effectively favourably coordinated with the wind shear effect, so that tower oscillations can be minimized or even counteracted. The method according to the invention also leads to reduction in the structural loads acting on the rotor blades, the tower, etc., since it adopts principles of cyclic pitch, in which a main pitch control signal is applied individually to the rotor blades to pitch these according to their rotor azimuth angle and/or the loads exerted on the blades, but does not increase the pitch activity of all blades collectively.

In a particularly preferred embodiment of the invention, an auxiliary pitch control signal is applied to a pitch system of a blade as that blade passes through a fraction or portion of the upper half of the rotor rotational plane, so that the corrective pitch adjustment of an auxiliary pitch control signal is only applied to the rotor blade as it is most affected by the higher wind speed at a correspondingly higher altitude. For example, an auxiliary pitch control signal can be applied to a pitch system of a blade as that blade passes through an upper quarter of the rotor rotational plane, whereby the "upper quarter" can be defined as the angular region or sector bounded by lines originating at the centre of the hub and lying at ±45° with respect to the reference 0°. In this example, the auxiliary pitch control signal is applied to a pitch system of a blade as that blade travels from 315° through the reference to 45° beyond the reference.

While the two regions or sectors described above are preferable choices for regions during which to apply an auxiliary pitch control signal, it is to be understood that any other defined region could be chosen. For example, it may be advantageous to apply the auxiliary pitch control signal to a rotor blade as it passes through a first quarter (from the reference 0° to ±90°) or a first third (from the reference 0° to ±120°), etc. Evidently, the wind turbine controller could chose a region as the circumstances require, and can alter the choice of region if need be. For example, depending on changes in the wind speed, wind direction, estimated wind shear, or other operational parameters, it may be advantageous to change over from applying the auxiliary pitch control signals during the upper quarter to applying them during the upper half, etc. Furthermore, the lubrication states of the individual pitch bearings may be different at any particular instant. Therefore, the auxiliary pitch control signal for one blade may be applied during a region that covers a larger or smaller angular sector than the other blade(s).

The auxiliary pitch correction signals can also be applied to the pitch systems of the blades such that a resulting structural load on one or more parts of the wind turbine is kept to a favourable minimum. Therefore, in a further preferred embodiment of the invention, the sector of the rotor rotational plane in which an auxiliary pitch control signal is to be applied is chosen on the basis of a desired minimum structural load as a result of the pitch angle correction. For example, it may be desirable to apply a pitch correction signal to a rotor blade as it passes through the lower half-plane. In this way, for example, a disturbance to the tower caused by pitching can be minimised, particularly in the case when the wind speed is lower in the bottom part of the rotor rotational plane.

The auxiliary pitch control signal could be applied to a pitch system every time the rotor blade passes through the chosen region, e.g. through the upper half, through the upper quarter, etc. Such a frequent correction may be undesirable, since each correction contributes to the overall wear of the pitch system. Therefore, in a further preferred embodiment of the invention, an auxiliary pitch control signal is applied to a pitch system according to a predefined time signal and/or according to a pitch activity history. For example, depending on the performance parameters and/or a pitch activity history, it may be sufficient actuate the pitch systems on a more frequent or a less frequent basis. A pitch system that has been inactive for a period of time, for example for several minutes, may be subject to an adjustment by an auxiliary pitch control signal. To this end, a counter or timer might record the elapsed time since the previous pitch adjustment, i.e. since the last time the pitch angle was changed using the main pitch control signal or the combined pitch control signal. If the wind turbine controller determines that the operating region in which the wind turbine is being operated requires relatively frequent pitch system movement in order to distribute the lubrication in the bearings, it may apply the auxiliary pitch signals at frequent intervals, e.g. every 5 minutes.

The sequence in which the auxiliary pitch control signals are applied to the rotor blades can be chosen in any appropriate way. In one preferred embodiment of the invention, only one auxiliary pitch control signal is applied to its corresponding pitch system during one revolution of the rotor, i.e. the pitch system of one blade is adjusted, while the pitch systems of the other two blades (in the case of a three-blade rotor) remain unchanged. This might be of advantage if a pitch correction is associated with increased noise, for example.

Alternatively, in a further preferred embodiment of the invention, an auxiliary pitch control signal is applied to each pitch system of the plurality of pitch systems during a single revolution of the rotor. Depending on the size of the sector of the rotor rotational plane during which an auxiliary pitch control signal is applied, it may be that these "overlap", i.e. the auxiliary pitch control for a first blade is not quite complete at the instant when the auxiliary pitch control for the next blade commences.

As indicated above, pitch corrections can be carried out intermittently as required, or as indicated by a pitch activity history. For example, in a preferred embodiment of the invention, the auxiliary pitch control signals can be applied successively to the corresponding pitch systems during consecutive revolutions of the rotor, so that at least one auxiliary pitch control signal is applied during each revolution.

When the pitch angle of a rotor blade is being adjusted in order to maximise the output power of the wind turbine generator, it may be detrimental to alter the pitch angle by the amount given by an auxiliary pitch control signal. Therefore, in a further preferred embodiment of the invention, the auxiliary pitch control signal is suppressed during operation of the wind turbine above rated power. Similarly, a correction may not be necessary if the pitch activity for a rotor blade indicates sufficient movement, so that it may be assumed that the lubricant status of the pitch bearing in the pitch system is satisfactory. According to the invention, an auxiliary pitch control signal is suppressed when a pitch activity value and/or a pitch variation value is below a predefined threshold. Such a threshold might define, for example, that a pitch system must be moved by 1° at most every 5 minutes. Then, if the main pitch control signal was applied collectively to all the rotor blades during the last 2 minutes, for example, there is no need to apply an auxiliary pitch control signal to a pitch system for at least another 3 minutes. Another approach might be to monitor the pitch activity of the individual blades at regular intervals, for example every 5 minutes and if the movement or pitch activity of a blade is judged not to be sufficient, an auxiliary pitch correction signal can be applied to the relevant blade(s).

The frequency with which a pitch system should be actuated may depend not only on the various performance parameters mentioned above, but also on the current situation inside the bearing itself. For example, even though lubricant can be topped up at regular intervals by a lubricant system, the level of lubricant in a pitch bearing may drop slightly over time, and this may well have a detrimental effect on the performance of the bearing. The viscosity of the lubricant can also alter over time or according to the temperature inside the pitch bearing. Therefore, in a particularly preferred embodiment of the invention, the system comprises a pitch system monitoring module for monitoring the lubrication status of a pitch bearing in a pitch system. Such a monitoring module might record a maintenance history, so that the elapsed time since the lubricant was last replenished can be determined. In addition or as an alternative, the monitoring module might comprise one or more sensors that can directly estimate a current lubricant level and/or lubricant pressure and/or a lubricant distribution, and can supply any relevant information to the sequencer, which can then decide how often and to what extent a pitch system should be actuated in the absence of a main pitch angle adjustment.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows an exemplary wind turbine and the rotational plane described by its rotor blades;
Fig. 2 shows a number of graphs illustrating the relationship between wind speed, wind turbine power and pitch activity;
Fig. 3 shows a block diagram of a system according to an embodiment of the invention;
Fig. 4 shows a schematic representation of a wind turbine hub incorporating the system of Fig. 3;
Fig. 5 shows a graphical representation of a plurality of auxiliary pitch control signals generated using the method according to a first embodiment of the invention;
Fig. 6 shows a graphical representation of a plurality of auxiliary pitch control signals generated using the method according to a second embodiment of the invention;
Fig. 7 shows a graphical representation of a plurality of auxiliary pitch control signals generated using the method according to a third embodiment of the invention.

In the drawings, like reference numbers refer to like objects throughout. Objects in the diagrams are not necessarily drawn to scale.

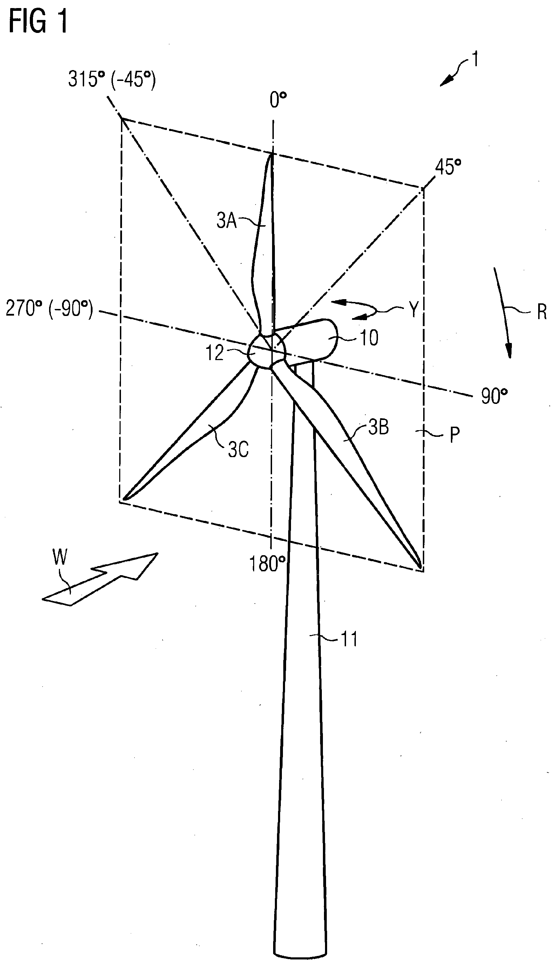

Fig. 1 shows an exemplary wind turbine 1, with a nacelle 10 mounted on a tower 11, and a number of blades 3A, 3B, 3C connected to a hub 12. When wind W exerts a force on the blades 3A, 3B, 3C, these are caused to rotate (in this example, the blades 3A, 3B, 3C rotate clockwise, when viewed from the front, as indicated by the arrow R). A wind turbine controller can drive a yaw ring to rotate the nacelle 10 in a direction Y, so that the hub 12 essentially always faces into the wind. The wind turbine controller can also control pitch angle positions of each rotor blade 3A, 3B, 3C so that the blades 3A, 3B, 3C are oriented with an optimum pitch angle. This allows a best possible conversion of the wind energy into a rotational motion of the hub and rotor. The rotor blades 3A, 3B, 3C define a vertical rotational plane P. The blade 3A that is arranged vertically in this diagram is shown at a reference position at 0° in this plane P. When this blade 3A moves through one complete rotation through 360°, its tip essentially describes a circle. The plane P can be divided into an upper half and a lower half, so that the blade 3A completes a half rotation as it moves through this region from 270° through the reference 0° to 90°, or ±90° about the reference 0°. A quarter rotation of the blade 3A within the upper half of the plane P is bounded by the diagonals at 315° and 45°, or ±45° about the reference 0°.

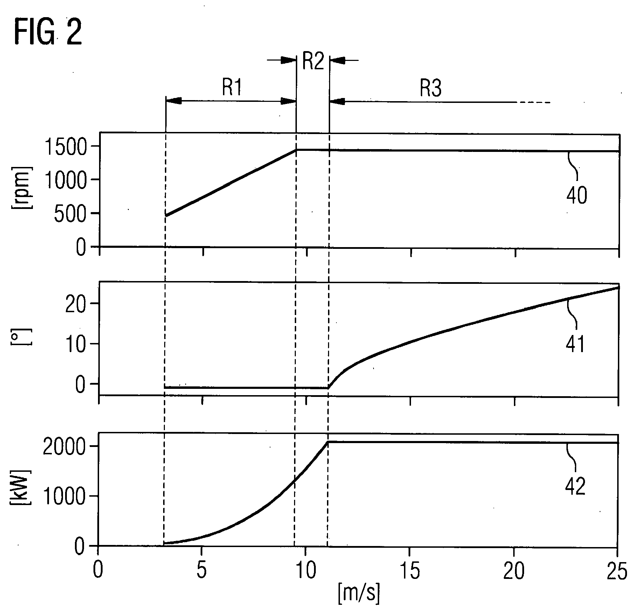

Fig. 2 shows a number of graphs illustrating the relationship between generator speed 40 in r.p.m., pitch angle 41 in degrees, and wind turbine output power 42 in kW, against wind speed in metres per second. Generally, the wind turbine controller must find a compromise to fulfil the conflicting requirements of maximising power, reducing load, and reducing acoustic noise, and therefore always outputs a certain pitch reference for the pitch system. At low wind speed, the hub rotates slowly. With rotational speed of the hub, the generator speed 42 increases also. At a certain maximum or rated speed, the wind turbine reaches its rated or nominal output power. Basically, there are three distinct regions R1, R2, R3 of interest. In a first region R1 or variable speed region R1, at low wind speeds, the pitch angle is maintained at its optimal value to maximize the power captured from the wind. In a second region R2 or constant speed region R2, the generator has reached its rated speed 40 but the output power 42 has not yet reached its rated level. Here, the pitch angle is typically constant or may be varied slightly in order to compensate for the constant rotational speed impacting the maximum power point when the wind speed increases. In the first region R1 and the second region R2, the pitch reference is typically a fixed value or varying 0 to 5 degrees from an optimal pitch angle, and is determined as a function of a performance parameter such as output power and/or torque and/or wind speed. The reason for changing the pitch reference can be to reduce loads and/or noise in certain operating regions, e.g. near the shoulder of the power curve. In a third region R3, at maximum generator speed and rated output power, the wind turbine controller must commence pitch control, i.e. must increase the pitch angle, to limit or reduce the power captured from the wind in order to maintain the nominal power and nominal rotational speed. To this end, the pitch angle of the rotor blades is adjusted as necessary. In this third region R3, the pitch reference is typically a function of the rotational speed, whereby the pitch is controlled to maintain the nominal rotational speed.

The invention is concerned with the "inactive" regions R1 and R2, during which the pitch systems would not normally be actuated by the wind turbine controller, and during the "active" region R3, in which a certain pitch angle may be maintained over a relatively long period of time, for example at a prolonged steady wind speed. Using the method according to the invention, auxiliary pitch actuation signals are generated during these regions to ensure that the pitch systems are intermittently caused to move by an amount that is sufficient to maintain a favourable lubricant distribution in the pitch bearings. For example, if the rotor speed is very low (e.g. idling at a speed below 0.2 rpm) then too much time might elapse between pitch corrections if the auxiliary pitch control is performed on the basis of rotor azimuth angle alone. At such low speeds, the auxiliary pitch control signals could be generated as a function of time. During the third or "active" region, while the wind turbine controller is adjusting the pitch angle, an additional auxiliary pitch correction is not required, since the movement of the pitch systems on account of the pitch angle adjustment is sufficient to ensure lubricant distribution. Therefore, during these phases, the generation of the auxiliary pitch control signals can be suppressed.

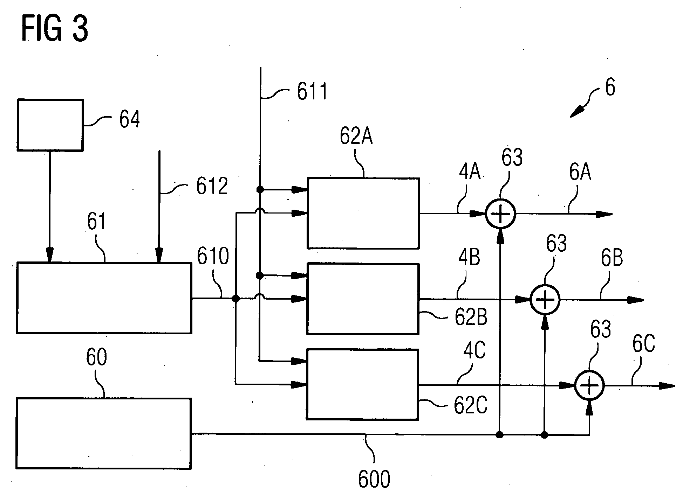

Fig. 3 is a block diagram showing units of a system 6 according to the invention,for controlling the pitch systems of a wind turbine. The wind turbine controller 60 generates a pitch reference 600 or pitch control signal 600, which is generally used to collectively adjust the pitch angles of the blades, as explained with the aid of Fig. 2 above. During a low wind-speed phase or a phase of prolonged steady wind speed, the control system uses a pitch lubrication sequencer 61 to enable the generation of individual pitch control signals. To this end, the pitch lubrication sequencer 61 generates an enable signal 610 during such phases. For example, the enable signal 610 might be active as long as the wind turbine controller has not entered the pitch control region R3.

To determine when the auxiliary pitch control signals should be applied, the wind turbine controller requires information about the position of the blades relative to a reference point in the rotor rotational plane, generally referred to as the blade rotor azimuth angle or blade rotor azimuth position. To this end, the rotor azimuth position is delivered to the control system 6 in the form of a suitable signal 611. In this way, an auxiliary pitch control signal can be applied to the pitch system of a blade when that blade is in the upper half of the rotational plane where it e.g. is subject to higher wind speed than in the lower half of the rotational plane due to wind shear.

Depending on the pitch bearing used, or on the type of lubricant used, the pitch systems might need to be actuated frequently, or only intermittently. It might be sufficient to actuate a pitch system every so often, for example at regular predefined intervals. To this end, the system 6 can comprise a pitch system monitoring module 64 which can track the time interval since the previous movement of a pitch system, or can store predefined time intervals after which a pitch system is to be actuated, and can provide the pitch lubrication sequencer 61 with an appropriate lubrication status signal 604. Alternatively or in addition, the pitch lubrication sequencer 61 can be provided with a time signal, to which it can respond and generate the enable signal 601 accordingly.

Here, for the sake of clarity, the control system 6 is shown to comprise one auxiliary controller 62A, 62B, 62C for each pitch system, but it is to be understood that a single auxiliary controller with multiple outputs could be used. Each auxiliary controller 62A, 62B, 62C uses the enable signal 610 and the rotor azimuth signal 611 to generate an auxiliary pitch control signal 4A, 4B, 4C. Each auxiliary pitch control signal 4A, 4B, 4C is combined with the pitch control signal 600 so that a corresponding number of distinct combined pitch control signals 6A, 6B, 6C is generated. For example, the three auxiliary controllers 62A, 62B, 62C can be used to generate auxiliary pitch control signals 4A, 4B, 4C for the blades 3A, 3B, 3C respectively of Fig. 1. Then, the combined pitch control signal 6A would be used to control the pitch system of blade 3A; the combined pitch control signal 6B would be used to control the pitch system of blade 3B, and the combined pitch control signal 6C would be used to control the pitch system of blade 3C.

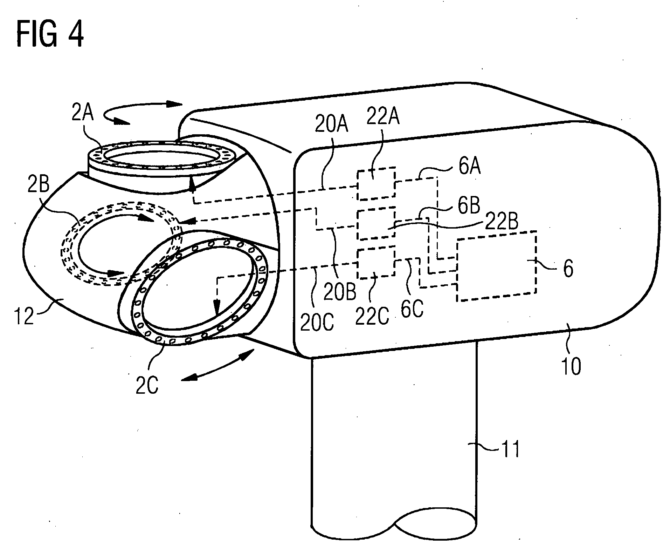

Fig. 4 shows how a wind turbine might incorporate the system of Fig. 3. The wind turbine hub 12 comprises a number of essentially circular pitch systems 2A, 2B, 2C, in this case three. A rotor blade can be fastened to a pitch system 2A, 2B, 2C, usually by means of fasteners inserted into flange bushings. A pitch system 2A, 2B, 2C is driven by a motor or actuator 22A, 22B, 22C so that the entire bearing 2A, 2B, 2C, and therefore also the rotor blade, is rotated by a desired amount, as indicated by the arrows.

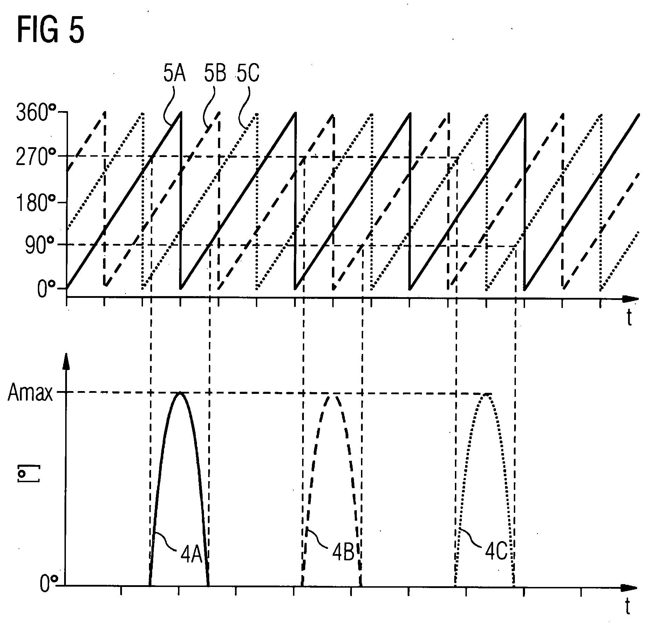

Fig. 5 shows a graphical representation of a plurality of auxiliary pitch control signals 4A, 4B, 4C generated using the method according to a first embodiment of the invention. The auxiliary pitch control signals 4A, 4B, 4C are applied to the respective rotor blades at certain defined intervals. Here, an auxiliary pitch control signal 4A, 4B, 4C is applied to its rotor blade when the rotor blade passes through the sector within ±90° about the reference 0° as described in Fig. 1. The circle described by a blade over time as it rotates from 0° to 360° is visually presented here by the sawtooth graphs 5A, 5B, 5C of blade angular travel. For the sake of simplicity, it is assumed that the blades rotate with a constant rotational velocity, with correspondingly uniform sawtooth graphs. Considering a first blade with sawtooth graph 5A: the auxiliary pitch control signal 4A for that blade is applied from the time the blade passes the 270° position until it passes through the 90° position of the rotational plane. In other words, the auxiliary pitch control signal 4A is applied to the blade only while it is in the upper half of the rotational plane. The amplitude of the auxiliary pitch control signal 4A increases from 0° (no correction to the pitch reference) to a maximum Aₘₐₓ (maximum correction to the pitch reference), whereby the maximum Aₘₐₓ coincides with the instant at which the rotor blade passes through the azimuth or reference point 0° in the rotational plane. The amplitude of the auxiliary pitch control signal 4A is directly related to the amount by which the corresponding actuator is caused to travel, and therefore also to the pitch angle of the corresponding rotor blade, i.e. the greater the amplitude of the auxiliary pitch control signal 4A, the more "positive" the pitch angle. For example, the maximum amplitude of the auxiliary pitch control signals 4A might correspond to a pitch angle adjustment of about 1° to 4° for rotor blade 3A. This auxiliary pitch control signal 4A is overlaid on the main pitch control signal, as explained in Fig. 2 above, and the combined pitch control signal is applied to the corresponding actuator, as described with Fig. 3 above.

The same applies to the other two blades, for which auxiliary pitch control signals 4B, 4C are added to the main pitch control signal and applied while those blades are in the upper half of the rotational plane P. As the graphs indicate, a time interval corresponding to almost one additional rotation of the hub separates consecutive auxiliary pitch control signals 4A, 4B, 4C. In this and in the following diagrams, the maximum pitch correction Aₘₐₓ is shown to be the same for all three blades, but it is to be understood that the pitch angles of the blades can be adjusted by different amounts.

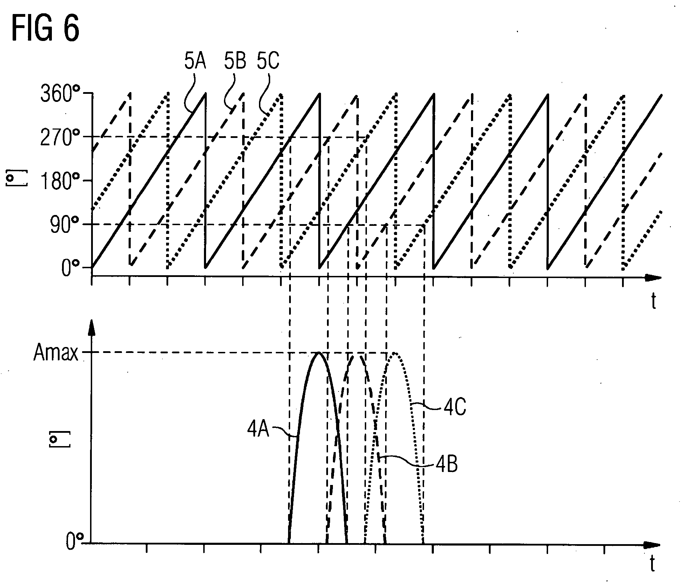

Fig. 6 shows a graphical representation of a plurality of auxiliary pitch control signals 4A, 4B, 4C generated using the method according to a second embodiment of the invention. Here, the time interval between successive auxiliary pitch control signals 4A, 4B, 4C is smaller. As the first blade 3A passes through the upper half of the rotational plane P shown in Fig. 1, i.e. through the sector given by ±90° about the reference 0°, its auxiliary pitch control signal 4A is applied. As the next blade 3B enters this sector, the first blade 3A still has 60° of travel to complete in the upper half of the rotational plane. Therefore, the auxiliary pitch control signals 4A, 4B overlap over a certain time interval, and the same applies for the auxiliary pitch control signals 4B, 4C. Here, only one set of three auxiliary pitch control signals 4A, 4B, 4C is shown. Of course, an auxiliary pitch control signal 4A, 4B, 4C could be applied to each blade during each rotation, so that the auxiliary pitch control signals 4C, 4A would also overlap.

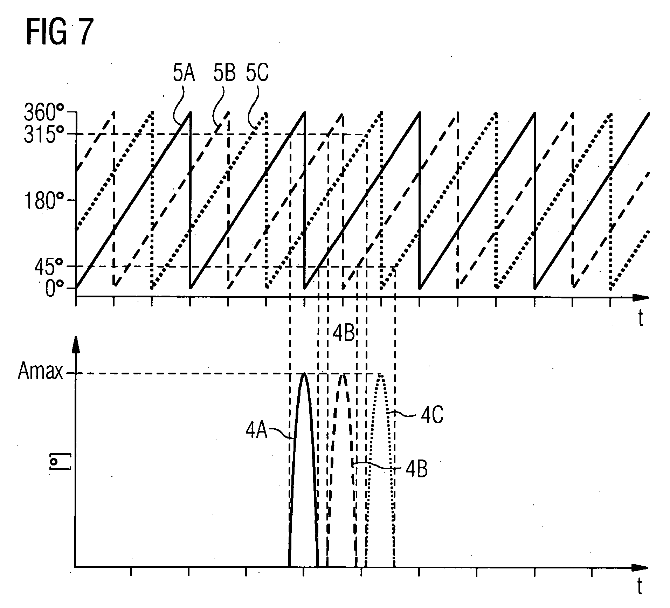

Fig. 7 shows a graphical representation of a plurality of auxiliary pitch control signals 4A, 4B, 4C generated using the method according to a third embodiment of the invention. As shown in Fig. 6 above, the auxiliary pitch control signals 4A, 4B, 4C are applied successively during one rotation of the hub. Here, however, an auxiliary pitch control signal 4A, 4B, 4C is applied as a blade passes through the sector given by ±45° about the reference 0°, i.e. through a quarter of the rotational plane. Therefore, the auxiliary pitch control signals 4A, 4B do not overlap. Again, only one set of three auxiliary pitch control signals 4A, 4B, 4C is shown, but it is to be understood that this sequence of auxiliary pitch control signals 4A, 4B, 4C could be applied to the blades repeatedly, for example after a certain time has elapsed, after a certain number of revolutions of the hub, according to a pitch activity history, etc.

Although the present invention has been disclosed in the form of preferred embodiments and variations thereon, it will be understood that numerous additional modifications and variations could be made thereto without departing from the scope of the invention. For example, in particularly hilly terrain, the wind shear might occasionally be "negative", i.e. the wind speed can be highest in the lower region of the rotor rotational plane. Should this situation arise, the sequencer can generate the auxiliary pitch control signals such that these are applied as the rotor blades move through the lower half of the rotor rotational plane.

For the sake of clarity, it is to be understood that the use of "a" or "an" throughout this application does not exclude a plurality, and "comprising" does not exclude other steps or elements. A "unit" or a "module" may comprise one or more units or modules, respectively.

## Claims

1. A method of controlling the pitch systems (2A, 2B, 2C) of a plurality of pitch systems (2A, 2B, 2C) of a wind turbine (1), which method comprises the steps of
- generating a main pitch control signal (600) for the pitch systems (2A, 2B, 2C) on the basis of a performance parameter of the wind turbine (1);
- generating a distinct auxiliary pitch control signal (4A, 4B, 4C) for each individual pitch system (2A, 2B, 2C) of the plurality of pitch systems (2A, 2B, 2C);
- adding an auxiliary pitch control signal (4A, 4B, 4C) to the main pitch control signal (600) to give a combined pitch control signal (6A, 6B, 6C) for a pitch system (2A, 2B, 2C); and
- controlling that pitch system (2A, 2B, 2C) in response to that combined pitch control signal (6A, 6B, 6C) **characterized in that** an auxiliary pitch control signal (4A, 4B, 4C) is suppressed when a pitch activity value and/or a pitch variation value is below a predefined threshold.

2. A method according to claim 1, wherein a duration and/or an amplitude of an auxiliary pitch control signal (4A, 4B, 4C) is determined on the basis of a performance parameter (40, 42) of the wind turbine (1).

3. A method according to claim 1 or claim 2, wherein an increase in amplitude of an auxiliary pitch control signal (4A, 4B, 4C) results in an increase of the pitch angle of a rotor blade (3A, 3B, 3C) connected to the pitch system (2A, 2B, 2C) to which that auxiliary pitch control signal (4A, 4B, 4C) is applied.

4. A method according to any of the preceding claims, wherein an auxiliary pitch control signal (4A, 4B, 4C) is applied to the pitch system (2A, 2B, 2C) of a rotor blade (3A, 3B, 3C) as that rotor blade (3A, 3B, 3C) passes through a specific sector of a rotor rotational plane (P), which the rotor rotational plane (P) comprises a virtual vertical plane (P) through the rotor blades (3A, 3B, 3C).

5. A method according to claim 4, wherein an auxiliary pitch control signal (4A, 4B, 4C) is applied to the pitch system (2A, 2B, 2C) of a blade (3A, 3B, 3C) as the blade (3A, 3B, 3C) passes through an upper half of the rotor rotational plane (P).

6. A method according to claim 5, wherein the auxiliary pitch control signal (4A, 4B, 4C) is applied to the pitch system (2A, 2B, 2C) of a rotor blade (3A, 3B, 3C) as the rotor blade (3A, 3B, 3C) passes through a fraction of the upper half of the rotor rotational plane (P).

7. A method according to any of the preceding claims,
wherein an auxiliary pitch control signal (4A, 4B, 4C) is applied to a pitch system (2A, 2B, 2C) according to a predefined time signal (601).

8. A method according to any of the preceding claims, wherein an auxiliary pitch control signal (4A, 4B, 4C) is applied to each pitch system (2A, 2B, 2C) of the plurality of pitch systems (2A, 2B, 2C) during a single revolution of the rotor.

9. A method according to any of claims 1 to 7, wherein only one auxiliary pitch control signal (4A, 4B, 4C) is applied to its corresponding pitch system (2A, 2B, 2C) during one revolution of the rotor.

10. A method according to claim 9, wherein the auxiliary pitch control signals (4A, 4B, 4C) are applied successively to the corresponding pitch systems (2A, 2B, 2C) during consecutive revolutions of the rotor.

11. A method according to any of the preceding claims, wherein the auxiliary pitch control signal (4A, 4B, 4C) is suppressed during operation of the wind turbine (1) at rated power.

12. A pitch control system (6) for controlling the pitch systems (2A, 2B, 2C) of a plurality of pitch systems (2A, 2B, 2C) of a wind turbine (1), which system comprises
- a controller (60) for generating a main pitch control signal (600) for the pitch systems (2A, 2B, 2C) on the basis of a performance parameter of the wind turbine (1);
- an auxiliary controller (62A, 62B, 62C) for generating an auxiliary pitch control signal (4A, 4B, 4C) for an individual pitch system (2A, 2B, 2C) of the plurality of pitch systems (2A, 2B, 2C);
- a combining unit (63) for adding an auxiliary pitch control signal (4A, 4B, 4C) to the main pitch control signal (600) to give a combined pitch control signal (6A, 6B, 6C) for a pitch system (2A, 2B, 2C); and
- a pitch system actuator (22A, 22B, 22C) for controlling that pitch system (2A, 2B, 2C) in response to that combined pitch control signal (6A, 6B, 6C), **characterized in that** an auxiliary pitch control signal (4A, 4B, 4C) is suppressed when a pitch activity value and/or a pitch variation value is below a predefined threshold.

13. A pitch control system according to claim 12, comprising a pitch system monitoring module (64) for monitoring the lubrication status of a pitch bearing of a pitch system (2A, 2B, 2C).

14. A wind turbine (1) comprising a number of rotor blades (3A, 3B, 3C) connected to a hub (12), wherein a rotor blade (3A, 3B, 3C) is connected to the hub (12) by means of a pitch system (2A, 2B, 2C), which wind turbine (1) comprises a pitch control system (6) according to claim 12 or claim 13 for controlling the pitch systems (2A, 2B, 2C).

## Patentansprüche

1. Verfahren zum Regeln der Pitch-Systeme (2A, 2B, 2C) mehrerer Pitch-Systeme (2A, 2B, 2C) einer Windturbine (1), das folgende Schritte umfasst:
- Erzeugen eines Pitch-Hauptregelsignals (600) für die Pitch-Systeme (2A, 2B, 2C) auf der Grundlage eines Leistungsparameters der Windturbine (1),
- Erzeugen eines eigenständigen zusätzlichen Pitch-Regelsignals (4A, 4B, 4C) für jedes einzelne Pitch-System (2A, 2B, 2C) der mehreren Pitch-Systeme (2A, 2B, 2C),
- Hinzufügen eines zusätzlichen Pitch-Regelsignals (4A, 4B, 4C) zu dem Pitch-Hauptregelsignal (600), so dass ein kombiniertes Pitch-Regelsignal (6A, 6B, 6C) für ein Pitch-System (2A, 2B, 2C) entsteht, und
- Regeln dieses Pitch-Systems (2A, 2B, 2C) als Reaktion auf dieses kombinierte Pitch-Regelsignal (6A, 6B, 6C), **dadurch gekennzeichnet, dass** ein zusätzliches Pitch-Regelsignal (4A, 4B, 4C) unterdrückt wird, wenn ein Pitch-Aktivitätswert und/oder ein Pitch-Verstellwert unterhalb eines vorgegebenen Schwellwerts liegt.

2. Verfahren nach Anspruch 1, bei dem eine Dauer und/oder eine Amplitude eines zusätzlichen Pitch-Regelsignals (4A, 4B, 4C) auf der Grundlage eines Leistungsparameters (40, 42) der Windturbine (1) bestimmt wird.

3. Verfahren nach Anspruch 1 oder 2, bei dem eine Vergrößerung der Amplitude eines zusätzlichen Pitch-Regelsignals (4A, 4B, 4C) zu einer Vergrößerung des Pitch-Winkels eines Rotorblatts (3A, 3B, 3C) führt, das mit dem Pitch-System (2A, 2B, 2C) verbunden ist, an das das zusätzliche Pitch-Regelsignal (4A, 4B, 4C) angelegt wird.

4. Verfahren nach einem der vorhergehenden Ansprüche, bei dem ein zusätzliches Pitch-Regelsignal (4A, 4B, 4C) an das Pitch-System (2A, 2B, 2C) eines Rotorblatts (3A, 3B, 3C) angelegt wird, wenn das Rotorblatt (3A, 3B, 3C) ein bestimmtes Segment einer Rotorrotationsebene (P) durchquert, die eine durch die Rotorblätter (3A, 3B, 3C) verlaufende, virtuelle vertikale Ebene (P) umfasst.

5. Verfahren nach Anspruch 4, bei dem ein zusätzliches Pitch-Regelsignal (4A, 4B, 4C) an das Pitch-System (2A, 2B, 2C) eines Blatts (3A, 3B, 3C) angelegt wird, wenn das Blatt (3A, 3B, 3C) eine obere Hälfte der Rotorrotationsebene (P) durchquert.

6. Verfahren nach Anspruch 5, bei dem das zusätzliche Pitch-Regelsignal (4A, 4B, 4C) an das Pitch-System (2A, 2B, 2C) eines Rotorblatts (3A, 3B, 3C) angelegt wird, wenn das Rotorblatt (3A, 3B, 3C) einen Teil der oberen Hälfte der Rotorrotationsebene (P) durchquert.

7. Verfahren nach einem der vorhergehenden Ansprüche, bei dem einem vorgegebenen Zeitsignal (601) entsprechend ein zusätzliches Pitch-Regelsignal (4A, 4B, 4C) an ein Pitch-System (2A, 2B, 2C) angelegt wird.

8. Verfahren nach einem der vorhergehenden Ansprüche, bei dem bei einer einzigen Umdrehung des Rotors ein zusätzliches Pitch-Regelsignal (4A, 4B, 4C) an jedes Pitch-System (2A, 2B, 2C) der mehreren Pitch-Systeme (2A, 2B, 2C) angelegt wird.

9. Verfahren nach einem der Ansprüche 1 bis 7, bei dem bei einer Umdrehung des Rotors nur ein zusätzliches Pitch-Regelsignal (4A, 4B, 4C) an sein entsprechendes Pitch-System (2A, 2B, 2C) angelegt wird.

10. Verfahren nach Anspruch 9, bei dem bei aufeinanderfolgenden Umdrehungen des Rotors die zusätzlichen Pitch-Regelsignale (4A, 4B, 4C) nacheinander an die entsprechenden Pitch-Systeme (2A, 2B, 2C) angelegt werden.

11. Verfahren nach einem der vorhergehenden Ansprüche, bei dem das zusätzliche Pitch-Regelsignal (4A, 4B, 4C) bei einem Betrieb der Windturbine (1) bei Nennleistung unterdrückt wird.

12. Pitch-Regelsystem (6) zum Regeln der Pitch-Systeme (2A, 2B, 2C) mehrerer Pitch-Systeme (2A, 2B, 2C) einer Windturbine (1), das Folgendes umfasst:
- eine Regelvorrichtung (60) zum Erzeugen eines Pitch-Hauptregelsignals (600) für die Pitch-Systeme (2A, 2B, 2C) auf der Grundlage eines Leistungsparameters der Windturbine (1),
- eine zusätzliche Regelvorrichtung (62A, 62B, 62C) zum Erzeugen eines zusätzlichen Pitch-Regelsignals (4A, 4B, 4C) für ein einzelnes Pitch-System (2A, 2B, 2C) der mehreren Pitch-Systeme (2A, 2B, 2C),
- eine Kombiniereinheit (63) zum Hinzufügen eines zusätzlichen Pitch-Regelsignals (4A, 4B, 4C) zu dem Pitch-Hauptregelsignal (600), so dass ein kombiniertes Pitch-Regelsignal (6A, 6B, 6C) für ein Pitch-System (2A, 2B, 2C) entsteht, und
- ein Pitch-Systemstellelement (22A, 22B, 22C) zum Regeln dieses Pitch-Systems (2A, 2B, 2C) als Reaktion auf dieses kombinierte Pitch-Regelsignal (6A, 6B, 6C), **dadurch gekennzeichnet, dass** ein zusätzliches Pitch-Regelsignal (4A, 4B, 4C) unterdrückt wird, wenn ein Pitch-Aktivitätswert und/oder ein Pitch-Verstellwert unterhalb eines vorgegebenen Schwellwerts liegt.

13. Pitch-Regelsystem nach Anspruch 12, das ein Pitch-Systemüberwachungsmodul (64) zum Überwachen des Schmierzustands eines Pitch-Lagers eines Pitch-Systems (2A, 2B, 2C) umfasst.

14. Windturbine (1) mit einer Anzahl Rotorblätter (3A, 3B, 3C), die mit einer Nabe (12) verbunden sind, wobei ein Rotorblatt (3A, 3B, 3C) mit Hilfe eines Pitch-Systems (2A, 2B, 2C) mit der Nabe (12) verbunden ist, wobei die Windturbine (1) ein Pitch-Regelsystem (6) nach Anspruch 12 oder 13 zum Regeln der Pitch-Systeme (2A, 2B, 2C) umfasst.

## Revendications

1. Un procédé de commande des systèmes de pas (2A, 2B, 2C) d'une pluralité de systèmes de pas (2A, 2B, 2C) d'une turbine éolienne (1), ledit procédé comprenant les étapes suivantes :
- la génération d'un signal de commande de pas principal (600) pour les systèmes de pas (2A, 2B, 2C) en fonction d'un paramètre de performance de la turbine éolienne (1),
- la génération d'un signal de commande de pas auxiliaire distinct (4A, 4B, 4C) pour chaque système de pas individuel (2A, 2B, 2C) de la pluralité de systèmes de pas (2A, 2B, 2C),
- l'ajout d'un signal de commande de pas auxiliaire (4A, 4B, 4C) au signal de commande de pas principal (600) de façon à produire un signal de commande de pas combiné (6A, 6B, 6C) pour un système de pas (2A, 2B, 2C), et
- la commande de ce système de pas (2A, 2B, 2C) en réponse à ce signal de commande de pas combiné (6A, 6B, 6C) **caractérisé en ce que** le signal de commande de pas auxiliaire (4A, 4B, 4C) est supprimé lorsqu'une valeur d'activité de pas et/ou une valeur de variation de pas se situe sous un seuil prédéfini.

2. Un procédé selon la revendication 1, dans lequel une durée et/ou une amplitude d'un signal de commande de pas auxiliaire (4A, 4B, 4C) est déterminée en fonction d'un paramètre de performance (40, 42) de la turbine éolienne (1).

3. Un procédé selon la revendication 1 ou 2, dans lequel une augmentation en amplitude d'un signal de commande de pas auxiliaire (4A, 4B, 4C) résulte en une augmentation de l'angle de pas d'une pale de rotor (3A, 3B, 3C) raccordée au système de pas (2A, 2B, 2C) à laquelle ce signal de commande de pas auxiliaire (4A, 4B, 4C) est appliqué.

4. Un procédé selon l'une quelconque des revendications précédentes, dans lequel un signal de commande de pas auxiliaire (4A, 4B, 4C) est appliqué au système de pas (2A, 2B, 2C) d'une pale de rotor (3A, 3B, 3C) au moment où cette pale de rotor (3A, 3B, 3C) passe au travers d'un secteur spécifique d'un plan de rotation de rotor (P), ledit plan de rotation de rotor (P) comprenant un plan vertical virtuel (P) au travers des pales de rotor (3A, 3B, 3C).

5. Un procédé selon la revendication 4, dans lequel un signal de commande de pas auxiliaire (4A, 4B, 4C) est appliqué au système de pas (2A, 2B, 2C) d'une pale (3A, 3B, 3C) au moment où la pale (3A, 3B, 3C) passe au travers d'une moitié supérieure du plan de rotation de rotor (P).

6. Un procédé selon la revendication 5, dans lequel le signal de commande de pas auxiliaire (4A, 4B, 4C) est appliqué au système de pas (2A, 2B, 2C) d'une pale de rotor (3A, 3B, 3C) au moment où la pale de rotor (3A, 3B, 3C) passe au travers d'une fraction de la moitié supérieure du plan de rotation de rotor (P).

7. Un procédé selon l'une quelconque des revendications précédentes, dans lequel un signal de commande de pas auxiliaire (4A, 4B, 4C) est appliqué à un système de pas (2A, 2B, 2C) en fonction d'un signal temporel prédéfini (601).

8. Un procédé selon l'une quelconque des revendications précédentes, dans lequel un signal de commande de pas auxiliaire (4A, 4B, 4C) est appliqué à chaque système de pas (2A, 2B, 2C) de la pluralité de systèmes de pas (2A, 2B, 2C) au cours d'une révolution unique du rotor.

9. Un procédé selon l'une quelconque des revendications 1 à 7, dans lequel uniquement un signal de commande de pas auxiliaire (4A, 4B, 4C) est appliqué à son système de pas correspondant (2A, 2B, 2C) au cours d'une révolution du rotor.

10. Un procédé selon la revendication 9, dans lequel les signaux de commande de pas auxiliaires (4A, 4B, 4C) sont appliqués successivement aux systèmes de pas correspondants (2A, 2B, 2C) au cours de révolutions consécutives du rotor.

11. Un procédé selon l'une quelconque des revendications précédentes, dans lequel le signal de commande de pas auxiliaire (4A, 4B, 4C) est supprimé au cours du fonctionnement de la turbine éolienne (1) à une puissance nominale.

12. Un système de commande de pas (6) destiné à la commande des systèmes de pas (2A, 2B, 2C) d'une pluralité de systèmes de pas (2A, 2B, 2C) d'une turbine éolienne (1), ledit système comprenant
- un dispositif de commande (60) destiné à la génération d'un signal de commande de pas principal (600) pour les systèmes de pas (2A, 2B, 2C) en fonction d'un paramètre de performance de la turbine éolienne (1),
- un dispositif de commande auxiliaire (62A, 62B, 62C) destiné à la génération d'un signal de commande de pas auxiliaire (4A, 4B, 4C) pour un système de pas individuel (2A, 2B, 2C) de la pluralité de systèmes de pas (2A, 2B, 2C),
- une unité de combinaison (63) destinée à l'ajout d'un signal de commande de pas auxiliaire (4A, 4B, 4C) au signal de commande de pas principal (600) de façon à produire un signal de commande de pas combiné (6A, 6B, 6C) pour un système de pas (2A, 2B, 2C), et
- un actionneur de système de pas (22A, 22B, 22C) destiné à la commande de ce système de pas (2A, 2B, 2C) en réponse à ce signal de commande de pas combiné (6A, 6B, 6C), **caractérisé en ce qu'**un signal de commande de pas auxiliaire (4A, 4B, 4C) est supprimé lorsqu'une valeur d'activité de pas et/ou une valeur de variation de pas se situe sous un seuil prédéfini,

13. Un système de commande de pas selon la revendication 12, comprenant un module de surveillance de système de pas (64) destiné à la surveillance de l'état de lubrification d'une articulation de pas d'un système de pas (2A, 2B, 2C).

14. Une turbine éolienne (1) comprenant un nombre de pales de rotor (3A, 3B, 3C) raccordées à un moyeu (12), une pale de rotor (3A, 3B, 3C) étant raccordée au moyeu (12) au moyen d'un système de pas (2A, 2B, 2C), ladite turbine éolienne (1) comprenant un système de commande de pas (6) selon la revendication 12 ou 13 destiné à la commande des systèmes de pas (2A, 2B, 2C).
